# EUROPEAN PATENT SPECIFICATION

(11) **EP 3 175 172 B1**
(45) Date of publication and mention of the grant of the patent: **10.10.2018**
(21) Application number: 15827633.7
(22) Date of filing: 30.07.2015
(51) Int. Cl.: F21L 4/02, F21V 5/00, G02B 3/10, F21V 23/04, F21V 19/02

(54) **DUAL FOCUS FLASHLIGHT**
DOPPELFOKUSTASCHENLAMPE
LAMPE-TORCHE À DOUBLE FOYER

(30) Priority: 01.08.2014 US 201462032470 P; 12.11.2014 US 201462078910 P
(43) Date of publication of application: 07.06.2017
(73) Proprietor: Coast Cutlery Co., Portland, OR 97218 (US)
(72) Inventor: WINDOM, Gregory David, Portland, OR 97218 (US); CHOO, Kam Fu, Portland, OR 97218 (US); SHI, Hai Rong, Yangdong Yangjiang City 529900 (CN); DING, Chao Jun, Yandong Yangjiang City 529900 (CN); FENG, Shao Jian, Yangjiang City, Guangdong (CN); LEUNG, Kin Pak, Hong Kong 999077 (CN)
(74) Representative: LS-MP von Puttkamer Berngruber Loth Spuhler
(86) International application number: PCT/US2015/042946
(87) International publication number: WO 2016/019162

(56) References cited:
- JP-A- 2003 263 907
- KR-A- 20050 056 687
- US-A- 3 517 185
- US-A1- 2006 158 895
- US-A1- 2010 073 783
- US-A1- 2011 063 856
- US-A1- 2012 176 780
- US-A1- 2012 220 256
- US-A1- 2013 301 242
- US-A1- 2013 329 411

## Description

### Technical Field

The present disclosure relates to dual-focus portable lighting devices, such a flashlights that emit beams having different focal distances and/or beam widths.

### Background

Flashlights have been produced that allow adjustment of the light beam in a continuous range of beam widths and/or focal distances ranging from a flood beam to a narrow beam, and vice versa. However, such systems typically compromise either the light output of the flood beam or the narrow focus (e.g., beam distance) of the spot beam. For instance, the brightness of the flood light may be compromised in order to achieve a long beam distance with the spot beam, or the beam distance of the spot beam may be compromised in order to achieve more light output in the flood mode, or both. US3,517,185 discloses a prior art flashlight.

### Brief Description of the Drawings

Embodiments will be readily understood by the following detailed description in conjunction with the accompanying drawings. Embodiments are illustrated by way of example and not by way of limitation in the figures of the accompanying drawings. The invention is defined by the subject-matter of claim 1. Embodiments not covered by claim 1 are not part of the invention but represent background art that is useful for understanding the invention.
**Figure 1** illustrates a front perspective view of a dual-focus flashlight, wherein the flashlight has a single lens having two separate focusing elements disposed therein, each focusing element offset a short distance from the center of the lens;
**Figure 2** illustrates a partial cutaway view of the dual-focus flashlight of **Figure 1****,** showing a partial cross sectional view through each of the two focusing elements, and showing two LED light sources having two different intensities, wherein one of the two LEDs is positioned behind each focusing element, and wherein each LED is mounted a different distance from its respective focusing element;
**Figures 3A** and **3B** show a perspective view **(****Figure 3A****)** and a cross-sectional view **(****Figure 3B****)** of the lens of the dual-focus flashlight of **Figure 1****,** illustrating the two focusing elements, each of which is spaced slightly away from the center of the lens;
**Figures 4A** and **4B** an exploded view **(****Figure 4A****)** and a perspective view **(****Figure 4B****)** of the lens and base member of the dual-focus flashlight of **Figure 1****,** illustrating the two focusing elements and a base member with two LED light sources mounted thereto;
**Figure 5A** and **5B** are two cross sectional views of the lens, base member, and LEDs of **Figure 4****,** showing the light distribution from the flood focusing element/LED **(****Figure 5A****)** and the spot focusing element/LED **(****Figure 5B****);** and
**Figures 6A** and **6B** are perspective views of a flashlight having a lens with three focusing elements, and a lens with four focusing elements, all in accordance with various embodiments.

### Detailed Description of Disclosed Embodiments

In the following detailed description, reference is made to the accompanying drawings which form a part hereof, and in which are shown by way of illustration embodiments that may be practiced. It is to be understood that other embodiments may be utilized and structural or logical changes may be made without departing from the scope. Therefore, the following detailed description is not to be taken in a limiting sense, and the scope of embodiments is defined by claim 1.

Various operations may be described as multiple discrete operations in turn, in a manner that may be helpful in understanding embodiments; however, the order of description should not be construed to imply that these operations are order dependent.

The description may use perspective-based descriptions such as up/down, back/front, and top/bottom. Such descriptions are merely used to facilitate the discussion and are not intended to restrict the application of disclosed embodiments.

The terms "coupled" and "connected" along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other.

For the purposes of the description, a phrase in the form "A/B" or in the form "A and/or B" means (A), (B), or (A and B). For the purposes of the description, a phrase in the form "at least one of A, B, and C" means (A), (B), (C), (A and B), (A and C), (B and C), or (A, B and C). For the purposes of the description, a phrase in the form "(A)B" means (B) or (AB) that is, A is an optional element.

The description may use the terms "embodiment" or "embodiments", which may each refer to one or more of the same or different embodiments. Furthermore, the terms "comprising", "including", "having" and the like, as used with respect to embodiments, are synonymous.

Embodiments herein provide an optical system that allows for a portable lighting device, such as a flashlight, that optimizes the light output and beam focus of both a flood beam and a spot beam. Numerous flashlights exist on the market that allow the distance between the optic and the light source to be adjusted in order to change the focus of the beam from a flood beam into a spot beam, and vice versa. An example of this kind of flashlights is described in the US-Patent 3,517,185 which relates to a rechargeable flashlight having dual reflectors for a spot light and a flood light whereby the flashlight body is compartmented with internal wall formations to form the battery/chamber and isolate the switching and wiring areas of the flashlight body from the spot of light and flood light. However, these lighting systems have various limitations. Some flashlights seek to optimize light output (e.g., lumens) of the flood beam at the expense of beam distance in the spot beam configuration. Other flashlights seek to optimize beam distance in the spot position, but sacrifice light output in the flood position. Still others compromise both beam distance and light output in an effort to split the difference between producing an optimal flood light and an optimal spot light.

These various drawbacks of the state of the art are solved by a dual-focus flashlight according to the features of claim 1.

Embodiments of the lighting systems disclosed herein include a single lens having two separate focusing elements disposed therein, one for a flood beam and one for a spot beam. Each of the two focusing elements is spaced a small distance from the center of the lens, and each is positioned in front of one of two light sources, such as LEDs. The flood beam focusing element and the spot beam focusing element are each designed to perform a single function (e.g., either spot or flood beam focusing). The flood beam focusing element may be optimized to shape the light beam into a wide, consistent flood beam, which, in various embodiments, may provide bright illumination over a wide area. In various embodiments, the spot beam focusing element may be optimized to focus the light beam into a narrow, bright beam, which, in various embodiments, may travel a great distance.

In various embodiments, the size of each light source also may be optimized to perform optimally under the selected condition (e.g., flood beam or spot beam). The LED that pairs with the flood beam focusing element (e. g., the flood beam LED) has a larger size "die" or light- emitting surface compared to the spot beam LED, and in some embodiments it may have a wider viewing angle of light output and/or may emit more lumens than the spot beam LED. In various embodiments, using an LED with a larger die helps produce a wider, brighter light that is more easily dispersed into a wide, bright beam.

Conversely, the LED that pairs with the spot beam focusing element (e. g., the spot beam LED) has a smaller size "die" or light-emitting surface (compared to the flood beam LED), and it may have a narrower viewing angle of light output and/or may emit fewer lumens than the flood beam LED. In various embodiments, using an LED with a smaller viewing angle for the spot beam may be helpful because the light leaves the LED in a tighter beam, thereby making it easier to shape into an even tighter beam as it passes through the focusing element. In various embodiments, a smaller "spot beam" LED may emit less light than a larger "flood beam" LED, but the tighter viewing angle means the light will be more intense and "packed" into a smaller beam. In various embodiments, even using a smaller LED, a "tight" spot beam may travel further than a large, spread-out flood beam from the brighter and larger "flood beam" LED.

Additionally, in various embodiments, the distance between each LED and its respective focusing element within the larger lens may be fixed and optimized to produce an optimal flood beam or an optimal spot beam. Each LED is disposed on a base member that, when installed in the flashlight, positions the larger "flood beam" LED a short distance from the "flood beam" focusing element, and the smaller "spot beam" LED a greater distance from the "spot beam" focusing element. In various embodiments, positioning the "spot beam" LED farther back from the focusing element may allow the "spot beam" focusing element to shape the spot beam into a tight beam. Conversely, positioning the "flood beam" LED a smaller distance from the focusing element may allow the "flood beam" focusing element to disperse the flood beam over a larger area.

Thus, disclosed in various embodiments is a dual-focus flashlight that overcomes the shortcomings of prior art devices. In a conventional single-LED focusing flashlight, one LED must serve as the light source for both the spot beam and the flood beam. In a flashlight having an LED with a small die, a tight viewing angle, and a lower total light output, the resulting spot beam would be bright, tight, and travel a long distance, but the width and total light output of the flood beam would be sacrificed. Conversely, in a flashlight having an LED with a large die, a wide viewing angle, and a high total light output, the flood beam would large and the total lumen rating would be high, but the spot beam would travel a shorter distance, would be wider in size, and would not be as suitable for long distance use. The dual-focus flashlights disclosed herein overcome these issues, and may produce both an optimal spot beam and an optimal flood beam.

Another advantage of the dual-focus flashlights described herein is that they do not include any focus adjustment mechanisms, as the distance between each light source and its focusing element is fixed. Accordingly, in various embodiments, the disclosed flashlights may have few or no moving parts, and as a result, they may be lighter and/or more durable than existing focusing flashlights. Additionally, in various embodiments, a user may toggle between the flood setting, the spot setting, and/or a dual setting wherein both LEDs are lit with the push of a single button or switch, for instance which may be located in any convenient position on the housing, such as the end or a side of the flashlight. For instance, in some embodiments, a user may turn the flashlight on and cycle between "spot" and "flood" modes (or "spot", "flood" and "dual source" modes) with repeated activations of a single push button. In other embodiments, separate buttons or other control elements may be provided for "power", "spot", "flood" and, optionally, "dual source" (e.g., both spot and flood LEDs powered on simultaneously).

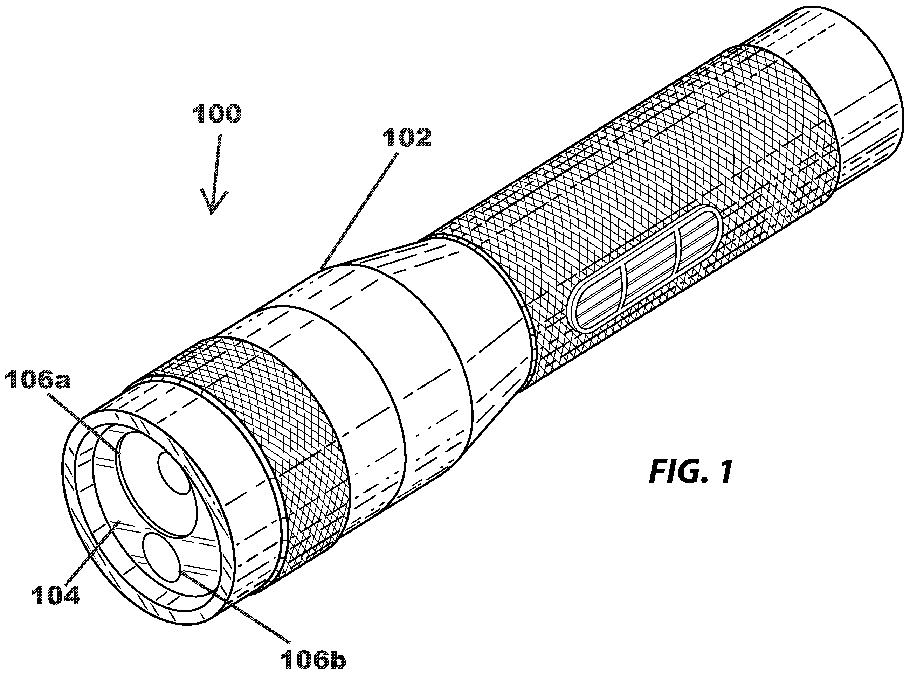

**Figure 1** illustrates a front perspective view of a dual-focus flashlight, wherein the flashlight has a single lens having two separate focusing elements disposed therein, each focusing element offset a short distance from the center of the lens, in accordance with various embodiments. In the illustrated embodiment, the flashlight **100** may have a traditional or conventional elongated housing **102** with a single lens **104** at one end. Lens **104** includes two separate focusing elements, **106a, 106b,** for shaping a light beam into a spot beam with a spot beam focusing element **106a,** or for shaping a light beam into a flood beam with a flood beam focusing element **106b.** Although lens **104** is illustrated as round, one of skill in the art will appreciate that it may take other forms, such as a quadrilateral, oval, or crescent.

In various embodiments, both of the spot focusing element **106a** and the flood focusing element **106b** may be spaced slightly away from the center point of lens **104.** Although the illustrated embodiment shows the two focusing elements **106a, 106b** as being spaced slightly different distances from the geometric center point of lens **104,** in other embodiments they may be spaced approximately the same distance from the geometric center point of lens **104.** Additionally, although the two focusing elements **106a, 106b** are illustrated as being different sizes, in other embodiments they may have substantially similar diameters.

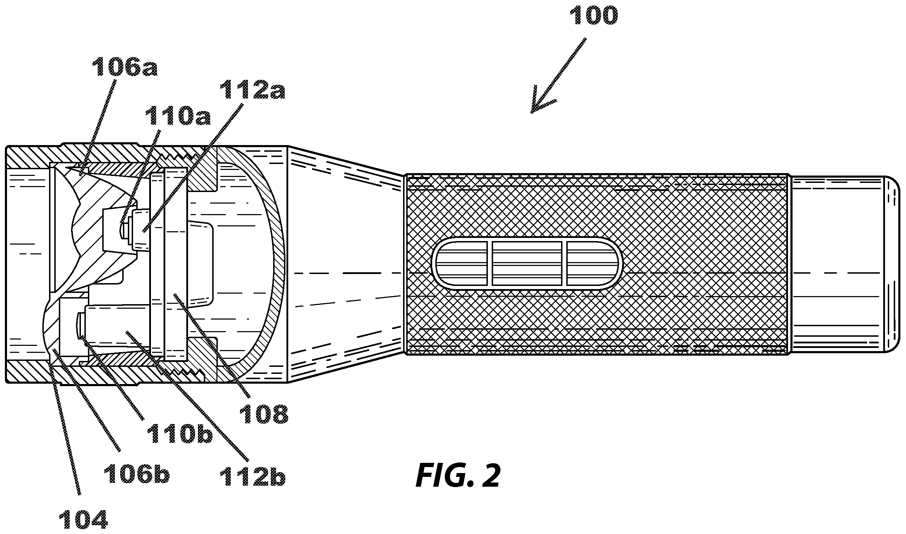

**Figure 2** illustrates a partial cutaway view of the dual-focus flashlight of **Figure 1****,** in accordance with various embodiments. In the illustrated embodiment, a partial cross sectional view can be seen through each of the two focusing elements **106a, 106b,** and two LED light sources **110a, 110b** each having a different intensity, are positioned directly behind the lens **104.** In various embodiments, the spot beam LED **110a** may be centered behind the spot beam focusing element **106a,** and the flood beam LED **110b** may be centered behind the flood beam focusing element **106b.** In various embodiments, the spot beam LED **110a** may have a smaller die and a narrower viewing angle compared to the flood beam LED **110b,** which may have a correspondingly larger die and a wider viewing angle. In various embodiments, these differences in size, viewing angle, and brightness (e. g., lumens) may work in concert with the different focusing elements **106a, 106b** to produce a tight spot beam with a long beam distance and a bright and wide flood beam.

The two LEDs **110a, 110b** are mounted to a base member **108,** which includes two pedestals **112a, 112b** configured to position each of the two LEDs **110a, 110b** the optimal focusing distance behind each focusing element **106a, 106b** to create an optimal spot beam and an optimal flood beam. In the illustrated embodiment, the distance between the spot beam focusing element **106a** and the spot beam LED **110a** is greater than the distance between the flood beam focusing element **106b** and the flood beam LED **110b.** In various embodiments, this difference in spacing may be due, at least in part, to the different optics of the spot beam focusing element **106a** and the flood beam focusing element **106b.**

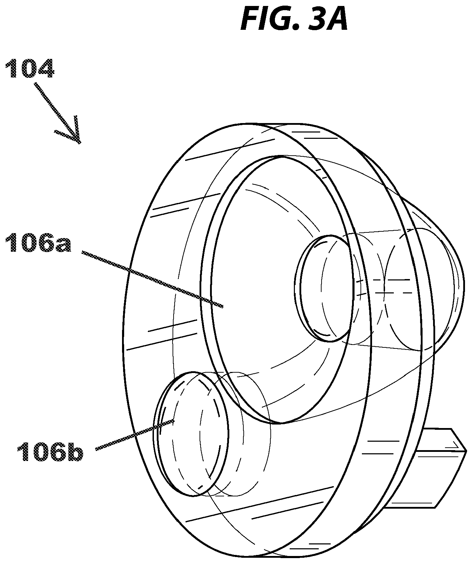

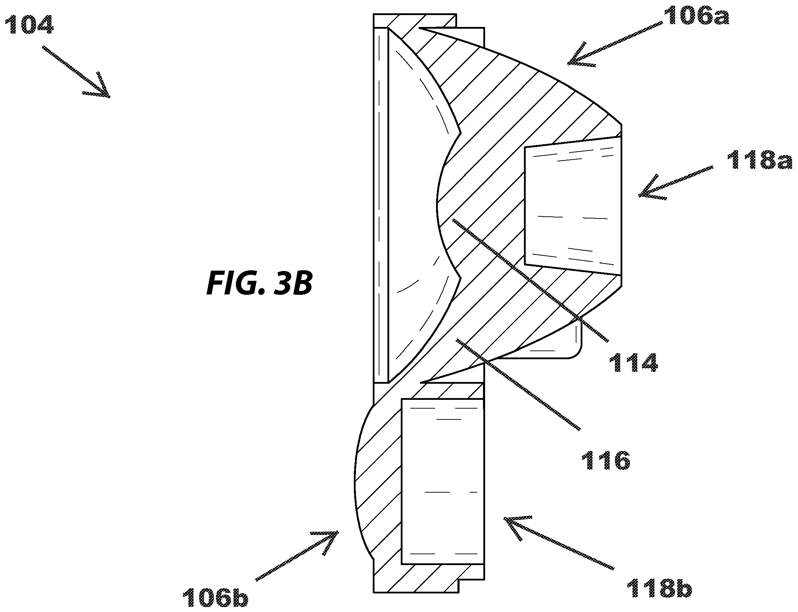

**Figures 3A** and **3B** show a perspective view **(****Figure 3A****)** and a cross-sectional view **(****Figure 3B****)** of the lens of the dual-focus flashlight of **Figure 1****,** illustrating the two focusing elements, each of which is spaced slightly away from the center of the lens, in accordance with various embodiments. In the illustrated embodiment, lens **104** includes two focusing elements **106a, 106b,** and in various embodiments, the flood beam focusing element **106b** may include a plano-convex, bi-convex, convex-concave, or meniscus lens adapted to disperse the light in a wide beam. Although the flood beam focusing element **106b** is illustrated as being generally round, in some embodiments, the flood beam focusing element **106b** may have an oval or elongated shape. For example, in some applications, such as automobile, motorcycle, or bicycle headlights, it may be advantageous to shape the light beam to extend out to the sides of a user's peripheral vision, rather than waste light by sending it upwards, where illumination is not needed. In some applications, an oval beam may be closer in shape to a human being's natural field of vision than a conventional round beam.

As best seen in **Figure 3B****,** the spot beam focusing element **106a** may be a more complex lens having a central focusing element **114** and an annular ring portion **116** that work in concert to focus the light into a narrow, tight beam. In various embodiments, the central focusing element **114** may be a plano-convex, bi-convex, convex-concave, or meniscus lens.

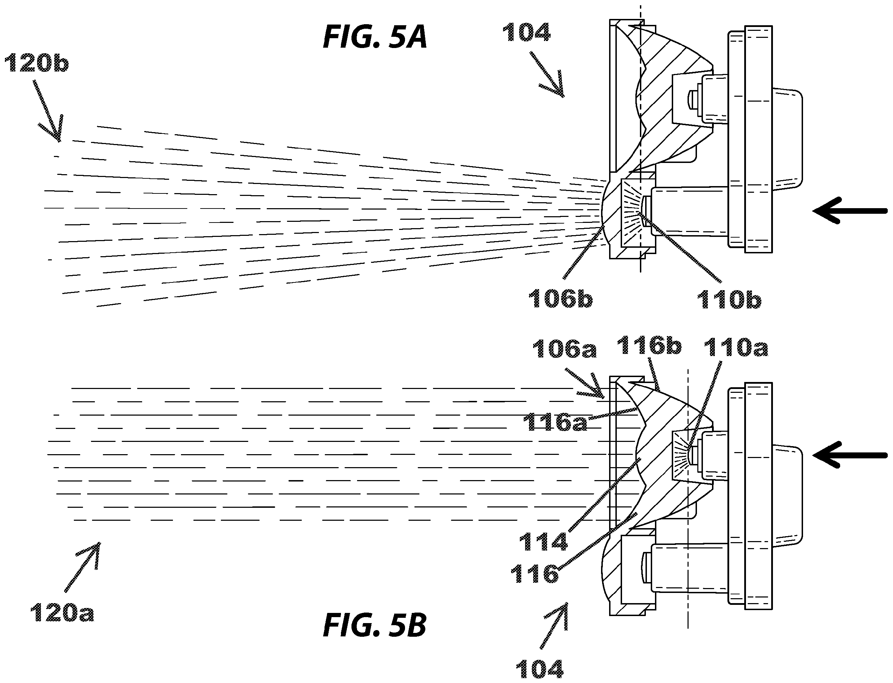

In some embodiments, either or both of the spot beam focusing element **106a** and the flood beam focusing element **106b** may include a rear void **118a, 118b,** which may be adapted for receiving at least a portion of the LED and/or pedestal. In various embodiments, the spot beam may use internal reflection to "collect" light and reflect it forward. For example, light rays may pass through the central focusing element, and then may be reflected forward in a narrow, focused beam by the internal or external sidewalls of the annular portion of the lens. This feature is best illustrated in **Figure 5B****,** which is discussed in greater detail below.

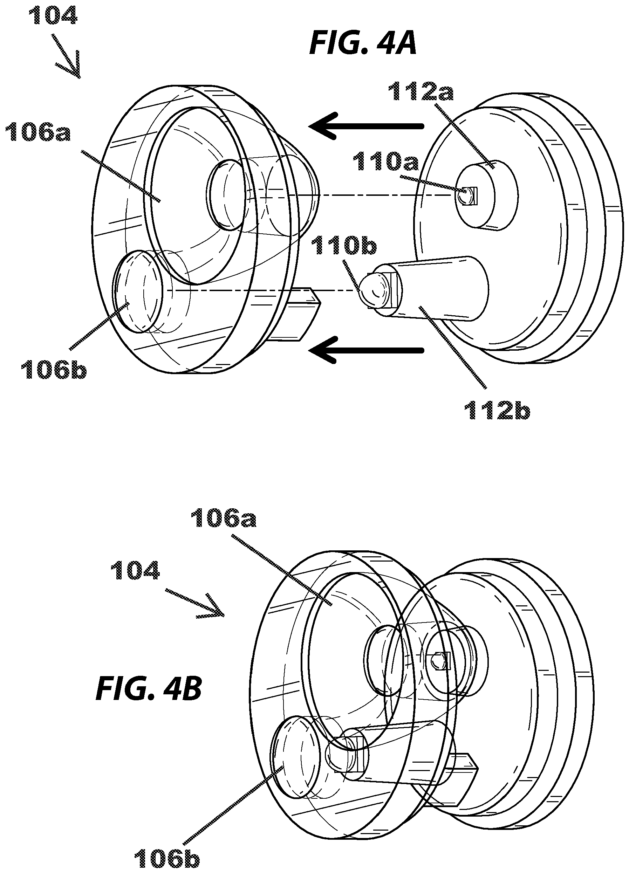

**Figures 4A** and **4B** show an exploded view **(****Figure 4A****)** and a perspective view **(****Figure 4B****)** of the lens of the dual-focus flashlight of **Figure 1****,** illustrating the two focusing elements, and a base member with two LED light sources mounted thereto, in accordance with various embodiments. In some embodiments, the lens **104** may include rear voids **118a, 118b,** which may be adapted for receiving at least a portion of the LEDs **110a, 110b** and/or pedestals **112a, 112b.**

**Figure 5A** and **5B** are two cross sectional views of the lens, base member, and LEDs of **Figure 4****,** showing the light distribution from the flood focusing element/LED **(****Figure 5A****)** and the spot focusing element/LED **(****Figure 5B****),** in accordance with various embodiments. As shown in **Figure 5A****,** as light passes from the flood beam LED **110b** through the flood beam focusing element **106b** of lens **104,** the flood beam focusing element **106b** directs the light into a wide, bright flood beam **120b.** As shown in **Figure 5B****,** as light passes from the spot beam LED **110a** through the spot beam focusing element **106a** of lens **104,** the central focusing element **114** and the annular ring portion **116** of the spot beam focusing element **106a** work in concert to direct the light into a tight, narrow spot beam **120a.** In some embodiments, the annular ring portion may reflect light in a forward direction from the inner side wall **116a** of the annular ring portion **116,** whereas in other embodiments, the annular ring portion may reflect light in a forward direction from the outer side wall **116b,** or both.

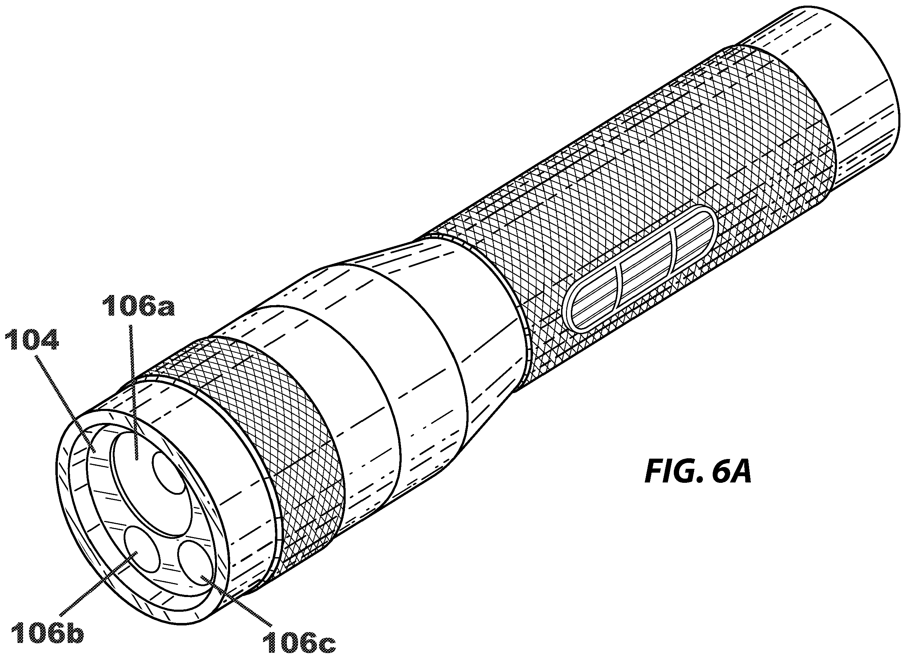

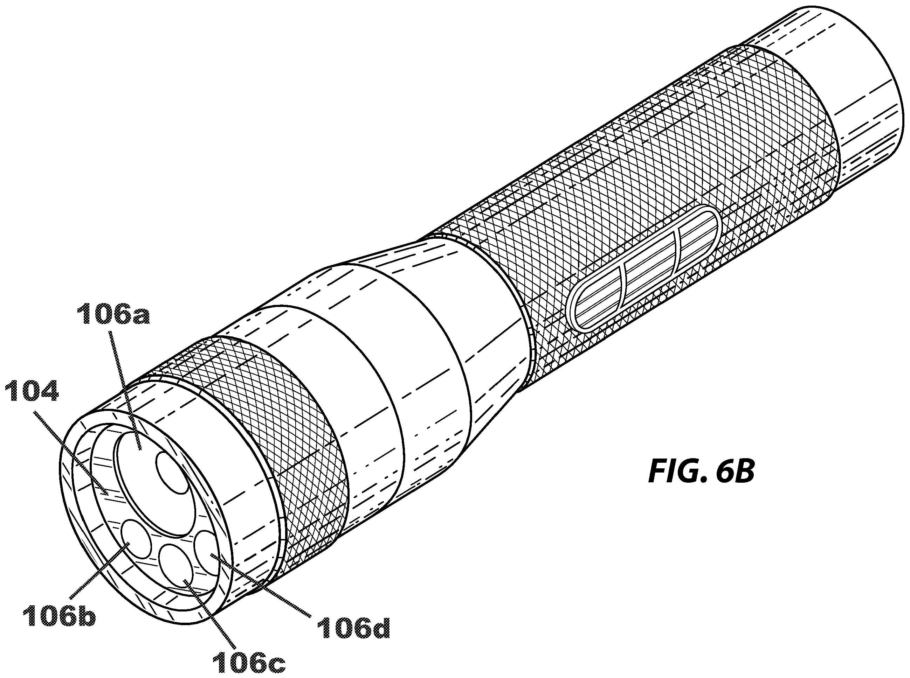

One of skill in the art will appreciate that in some situations, it may be desirable to illuminate both the spot beam LED and the flood beam LED simultaneously, for instance when a long distance beam is needed, but general illumination of the near field is also desired. In these instances, both the spot beam LED and the flood beam LED may be illuminated simultaneously. Additionally, as shown in **Figures 6A** and **6B****,** in various embodiments, the lens 104 may include three **(****Figure 6A****)** or four **(****Figure 6B****)** separate focusing elements, **106a, 106b, 106c,** and **106d ,** for shaping a light beam into a spot beam with a spot beam focusing element **106a,** for shaping a light beam into a flood beam with a flood beam focusing element **106b,** and additional focusing elements for shaping a light beam from third (and optionally fourth or more) light sources. Although focusing elements **106c** and **106d** are illustrated as flood beam focusing elements, one of skill in the art will appreciate that additional spot beam focusing elements, or even simple reflectors, may be substituted. In various embodiments, the additional light sources may be colored LEDS, such as red, blue, green, or UV LEDs, or they may be infrared LEDs. For instance, in various embodiments, an infrared LED may be used in conjunction with night vision goggles.

Although certain embodiments have been illustrated and described herein, it will be appreciated by those of ordinary skill in the art that a wide variety of alternate and/or equivalent embodiments or implementations calculated to achieve the same purposes may be substituted for the embodiments shown and described without departing from the scope. Those with skill in the art will readily appreciate that embodiments may be implemented in a very wide variety of ways. This application is intended to cover any adaptations or variations of the embodiments discussed herein. Therefore, it is manifestly intended that embodiments be limited only by the scope of claim 1.

## Claims

1. A dual-focus flashlight (100) comprising:
a housing member (102);
a lens (104) having a geometric center point, wherein the lens (104) comprises:
a first focusing element, wherein the first focusing element (106a) is adapted to shape a light beam into a spot beam, and wherein the first focusing element is spaced a first distance from the geometric center point of the lens (104); and
a second focusing element (106b), wherein the second focusing element is adapted to shape a light beam into a flood beam, and wherein the second focusing element is spaced a second distance from the geometric center point of the lens;
a first LED (110a) positioned to direct light through the first focusing element (106a);
a second LED (110b) positioned to direct light through the second focusing element (106b);
a power source disposed within the housing member (102) and adapted to provide power to the first and second LEDs; and
a control element configured to selectively provide power to the first LED (110a), the second LED (110b), or both the first and second LEDs, wherein the first LED has a smaller die than the second LED, and wherein the distance between the first LED and the first focusing element is greater than the distance between the second LED and the second focusing element and
wherein the flashlight further comprises a base member (108) to which the first and second LEDs (110a, 110b) are mounted, and, optionally
the base member comprises a first pedestal (112a) configured to position the first LED (110a) in a position relative to the first focusing member (106a), and wherein the position of the first LED is selected to generate an optimal spot beam
wherein the base member (108) comprises a second pedestal (112b) configured to position the second LED (110b) in a position relative to the second focusing member (106b), and wherein the position of the second LED is selected to generate an optimal flood beam, wherein,
the first focusing element (106a) comprises a central focusing element (114) and an annular ring portion (116) extending from and surrounding the central focusing element,
the central focusing element (114) comprises a plano-convex, convex-concave, or meniscus lens,
the second focusing element (106b) comprises a plano-convex, convex-concave, or meniscus lens, or, optionally wherein the second focusing element consists essentially of a plano-convex, convex-concave, or meniscus lens,
the first focusing element (106a) further comprises a side wall extending from the central focusing element and configured to form a rear void (118a) for receiving at least a portion of the first LED (110a),
the second focusing element (106b) further comprises a side wall extending therefrom and configured to form a rear void (118b) for receiving at least a portion of the second LED (110b), and
wherein the first and second distances from the geometric center point of the lens are substantially the same, or, optionally
wherein the first and second distances from the geometric center point of the lens are different, .
wherein the control element is a switch, and, optionally, wherein repeated activation of the switch causes the flashlight to change modes, wherein a first mode causes only the first LED to be activated and a second mode causes only the second LED to be activated,
wherein a third mode causes both the first and second LEDs to be activated, and, optionally, wherein a fourth mode causes the flashlight to power off.

## Patentansprüche

1. Doppelfokus-Taschenlampe (100), umfassend:
ein Gehäuseelement (102);
eine Linse (104) mit einem geometrischen Mittelpunkt, wobei die Linse (104) umfasst:
ein erstes Fokussierelement, wobei das erste Fokussierelement (106a) so ausgelegt ist, dass es einen Lichtstrahl zu einem Punktlichtstrahl formt, und wobei das erste Fokussierelement um einen ersten Abstand vom geometrischen Mittelpunkt der Linse (104) beabstandet ist; und
ein zweites Fokussierelement (106b), wobei das zweite Fokussierelement so ausgelegt ist, dass es einen Lichtstrahl zu einem Flutlichtstrahl formt, und wobei das zweite Fokussierelement um einen zweiten Abstand vom geometrischen Mittelpunkt der Linse beabstandet ist;
eine erste LED (110a), die so positioniert ist, dass sie Licht durch das erste Fokussierelement (106a) lenkt;
eine zweite LED (110b), die so positioniert ist, dass sie Licht durch das zweite Fokussierelement (106b) lenkt;
eine Stromquelle, die im Gehäuseelement (102) angeordnet ist und so ausgelegt ist, dass sie die erste und zweite LED mit Strom versorgt; und
ein Steuerelement, das so ausgestaltet ist, dass es wahlweise die erste LED (110a), die zweite LED (110b) oder sowohl die erste als auch die zweite LED mit Strom versorgt, wobei die erste LED einen kleineren Chip als die zweite LED aufweist und wobei der Abstand zwischen der ersten LED und dem ersten Fokussierelement größer als der Abstand zwischen der zweiten LED und dem zweiten Fokussierelement ist und
wobei die Taschenlampe des Weiteren ein Basiselement (108) umfasst, an dem die erste und zweite LED (110a, 110b) montiert sind, und optional
das Basiselement einen ersten Sockel (112a) umfasst, der so ausgestaltet ist, dass er die erste LED (110a) in einer Position relativ zum ersten Fokussierelement (106a) positioniert, und wobei die Position der ersten LED derart gewählt ist, dass ein optimaler Punktlichtstrahl erzeugt wird,
wobei das Basiselement (108) einen zweiten Sockel (112b) umfasst, der so ausgestaltet ist, dass er die zweite LED (110b) in einer Position relativ zum zweiten Fokussierelement (106b) positioniert, und wobei die Position der zweiten LED derart gewählt ist, dass ein optimaler Flutlichtstrahl erzeugt wird,
wobei
das erste Fokussierelement (106a) ein zentrales Fokussierelement (114) und einen kranzförmigen Ringabschnitt (116) umfasst, der sich vom zentralen Fokussierelement erstreckt und dieses umgibt,
das zentrale Fokussierelement (114) eine plankonvexe, konvex-konkave oder meniskusförmige Linse umfasst,
das zweite Fokussierelement (106b) eine plankonvexe, konvex-konkave oder meniskusförmige Linse umfasst oder wobei optional das zweite Fokussierelement im Wesentlichen aus einer plankonvexen, konvex-konkaven oder meniskusförmigen Linse besteht,
das erste Fokussierelement (106a) des Weiteren eine Seitenwand umfasst, die sich vom zentralen Fokussierelement erstreckt und so ausgestaltet ist, dass sie einen rückwärtigen Hohlraum (118a) zur Aufnahme wenigstens eines Abschnitts der ersten LED (110a) bildet,
das zweite Fokussierelement (106b) des Weiteren eine Seitenwand umfasst, die sich von diesem erstreckt und so ausgestaltet ist, dass sie einen rückwärtigen Hohlraum (118b) zur Aufnahme wenigstens eines Abschnitts der zweiten LED (110b) bildet, und
wobei der erste und zweite Abstand vom geometrischen Mittelpunkt der Linse im Wesentlichen gleich sind oder
wobei optional der erste und zweite Abstand vom geometrischen Mittelpunkt der Linse unterschiedlich sind,
wobei das Steuerelement ein Schalter ist und wobei optional eine wiederholte Betätigung des Schalters bewirkt, dass die Taschenlampe den Modus wechselt, wobei ein erster Modus bewirkt, dass nur die erste LED aktiviert wird, und ein zweiter Modus bewirkt, dass nur die zweite LED aktiviert wird,
wobei ein dritter Modus bewirkt, dass sowohl die erste als auch die zweite LED aktiviert werden, und wobei optional ein vierter Modus bewirkt, dass sich die Taschenlampe ausschaltet.

## Revendications

1. Lampe torche à double foyer (100) comprenant :
un élément de boîtier (102) ;
une lentille (104) ayant un point central géométrique, la lentille (104) comprenant :
un premier élément de focalisation, le premier élément de focalisation (106a) étant adapté pour former un faisceau de lumière en un faisceau étroit et le premier élément de focalisation étant espacé d'une première distance du point central géométrique de la lentille (104) ; et
un deuxième élément de focalisation (106b), le deuxième élément de focalisation (106b) étant adapté pour former un faisceau de lumière en un faisceau large et le deuxième élément de focalisation étant espacé d'une deuxième distance du point central géométrique de la lentille ;
une première DEL (diode électroluminescente) (110a) positionnée pour diriger la lumière à travers le premier élément de focalisation (106a) ;
une deuxième DEL (110b) positionnée pour diriger la lumière à travers le deuxième élément de focalisation (106b) ;
une source d'énergie agencée à l'intérieur de l'élément de boîtier (102) et adaptée pour fournir de l'énergie aux première et deuxième DEL ; et
un élément de commande configuré pour fournir sélectivement de l'énergie à la première DEL (110a), à la deuxième DEL (110b) ou aux deux première et deuxième DEL , dans lequel la première DEL a une puce plus petite que la deuxième DEL, et dans lequel la distance entre la première DEL et le premier élément de focalisation est plus grande que la distance entre la deuxième DEL et le deuxième élément de focalisation, et
dans laquelle la lampe torche comprend en outre un élément de base (108) sur lequel sont montées les première et deuxième DEL (110a, 110b), et, en option,
l'élément de base (108) comprend un premier socle (112a) configuré pour positionner la première DEL (110a) dans une position par rapport au premier élément de focalisation (106a), et dans lequel la position de la première DEL est sélectionnée pour engendrer un faisceau étroit optimal,
dans laquelle l'élément de base (108) comprend un deuxième socle (112b) configuré pour positionner la deuxième DEL (110b) dans une position par rapport au deuxième élément de focalisation (106b), et dans lequel la position de la deuxième DEL est sélectionnée pour engendrer un faisceau large optimal,
dans laquelle
le premier élément de focalisation (106a) comprend un élément de focalisation central (114) et une portion annulaire (116) en forme de bague qui s'étend depuis l'élément de focalisation central et entoure celui-ci,
l'élément de focalisation central (114) comprend une lentille plan-convexe, convexe-concave ou en forme de ménisque,
le deuxième élément de focalisation (106b) comprend une lentille plan-convexe, convexe-concave ou en forme de ménisque ou, en option, dans laquelle le deuxième élément de focalisation consiste sensiblement en une lentille plan-convexe, convexe-concave ou en forme de ménisque,
le premier élément de focalisation (106a) comprend en outre une paroi latérale s'étendant depuis l'élément de focalisation central et configurée pour former un vide arrière (118a) pour recevoir au moins une portion de la première DEL (110a),
le deuxième élément de focalisation (106b) comprend en outre une paroi latérale s'étendant depuis celui-ci et configurée pour former un vide arrière (118b) pour recevoir au moins une portion de la deuxième DEL (110b), et
dans laquelle les première et deuxième distances par rapport au point central géométrique de la lentille sont sensiblement les mêmes, ou, en option,
dans laquelle les première et deuxième distances par rapport au point central géométrique de la lentille sont différentes,
dans laquelle l'élément de commande est un commutateur et, en option, dans laquelle un actionnement répété du commutateur suscite la lampe torche à changer de mode, dans laquelle un premier mode suscite seulement la première DEL à être actionnée et un deuxième mode suscite seulement la deuxième DEL à être actionnée,
dans laquelle un troisième mode suscite les deux première et deuxième DEL à être actionnées et, en option, dans laquelle un quatrième mode suscite la lampe torche à s'éteindre.
